(19) **Europäisches Patentamt / European Patent Office / Office européen des brevets**

(11) **EP 3 531 368 B1**

(12) **EUROPEAN PATENT SPECIFICATION**

(45) Date of publication and mention
of the grant of the patent:
**15.09.2021 Bulletin 2021/37**

(51) Int Cl.:
*G06Q 50/06* $^{(2012.01)}$     *G06Q 10/06* $^{(2012.01)}$
*G01K 17/06* $^{(2006.01)}$

(21) Application number: **18157903.8**

(22) Date of filing: **21.02.2018**

(54) **UTILITY DISTRIBUTION NETWORK ANALYTICS**

ENERGIEVERSORGUNGSNETZANALYTIK

ANALYSE DE RÉSEAU DE DISTRIBUTION PUBLIC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.08.2019 Bulletin 2019/35**

(73) Proprietor: **Kamstrup A/S
8660 Skanderborg (DK)**

(72) Inventor: **Rasmussen, Morten Karstoft
8260 Viby J (DK)**

(74) Representative: **Plougmann Vingtoft a/s
Strandvejen 70
2900 Hellerup (DK)**

(56) References cited:
**EP-A1- 3 112 823**     **EP-A1- 3 199 931
WO-A1-2018/026651**

- **Kamstrup: "Data sheet MULTICAL 6L2", , 31
January 2015 (2015-01-31), XP055490427,
Retrieved from the Internet:
URL:http://products.kamstrup.com/ajax/down
loadFile.php?uid=54b5123d5c1fb&display=1
[retrieved on 2018-07-05]**

Printed by Jouve, 75001 PARIS (FR)

## Description

FIELD OF THE INVENTION

The present invention relates to analytics of data collected by use of advanced metering infrastructures, especially analytics of data from consumption meters in a district heating utility distribution network.

BACKGROUND OF THE INVENTION

Utility companies desire to have a real time overview of their distribution network in terms of current state and performance. This enables the utility company to respond immediately to anomalies, and to monitor the quality of the delivered utility.

Advanced Metering Infrastructure (AMI) systems are becoming widely used by utility companies. The AMI systems are evolving from systems collecting data from the utility meters infrequently or ad hoc for billing purposes to systems collecting time series of data. Such time series of data are suitable for not only billing but also for analytics and modelling, with the purpose of optimizing the utility distribution network and business. This evolvement has started in the field of electricity utilities, where the mains powered meters have sufficient energy supply to transmit large amounts of data suitable for advanced analytics. Battery operated meters, such as water meters, heat meters, cooling meters or gas meters, are often designed for a lifetime of 16-20 years without a battery change, the amount of data that can be delivered from meters under these constraints is thus very limited. Communication and battery technologies have improved and Collection of Increased amounts of data from battery operated utility meters is however now becoming a reality. The use of these data for analytics and modelling is becoming a valuable element in optimizing production, distribution and consumption of the delivered utility.

Utility companies have previously focused on using the collected data to improve the energy performance of individual buildings. However, as e.g. district heating becomes more complex, integrating many different heat sources, it is increasingly important for utilities to have an optimized infrastructure. An optimized distribution network presents opportunities for significant cost savings for e.g. district heating utilities in particularly two areas: reducing heat loss and improving asset management.

Up until now utilities have used static analysis of the network based on simulations of the network. These simulations does however not reveal changes in the network due to aging or damages such as the insulation effect of the pipes deteriorating or leaks in the system.

Today, most utilities select specific locations in the network, e.g. wells, where flow, temperature and perhaps pressure is measured, using either movable or static measurement equipment. On these individual positions in the distribution network data may be obtained frequently because the meters may be externally powered and connected to a communication infrastructure suitable for delivering huge amounts of data. This is however, an expensive solution, which is not providing information on all parts of the network due to the limited number of measurement positions. This solution does thus not enable a general analysis of the distribution network.

EP 3 199 931 A1 discloses a consumption meter is provided for measuring a fluid flow rate or an energy flow rate of a utility. The consumption meter is arranged to measure the fluid flow rate or the energy flow rate with a first measurement frequency which is increased to a second and higher measurement frequency provided that a change in the fluid flow rate or the energy flow rate exceeds a predetermined change.

WO 2018/026651 A1 discloses a computer apparatus which runs a hydraulic model using real-time or near-real-time data from an Automated or Advanced Metering Infrastructure (AMI), to improve model accuracy, particularly by obtaining more accurate, higher-resolution water demand values for service nodes in the model. Improving the accuracy of water demand calculation for the service nodes in the model stems from an improved technique that more accurately determines which consumption points in the water distribution system should be associated with each service node and from the use of real-time or near-real-time consumption data. The computer apparatus uses the water demand values to improve the accuracy and resolution of its water flow and pressure estimates. In turn, the improved flow and pressure estimation provides for more accurate control, e.g., pumping or valve control, flushing control or scheduling, leak detection, step testing, etc.

EP 3 112 823 A1 discloses A system for monitoring a utility network, e.g. to determine an error state such as a pipe leak etc. The system comprises a plurality of consumption meters at respective consumer sites. Besides determining a consumed quantity of the utility, these meters can measure a first parameter indicative of fluid flow rate, and at least one second parameter indicative of one of: pressure transients, noise level, and turbidity of the fluid. Via their communication modules, the meters can transmit all of: data representing the consumed quantity, the first and second parameters, and an indication of a location of its location in the utility network, e.g. a unique identification number. A monitor algorithm is used to process the received first and second parameters according to a predetermined analysis algorithm, preferably involving a correlation analysis between flow rate and one or more of the second parameters. This algorithm produces an output which is compared with a reference value, e.g. such as based on a statistically based baseline value measured for the utility network or based on a general database value, and a state of the utility network is then determined and output accordingly.

Using the data such as flow, temperature and pressure measured by the utility meters will however provide a vast number of measurements from all end points of the distribution network. This data could facilitate a data driven model of the distribution network. Such a model may be used to estimate various parameters which are relevant in order to monitor and optimize the distribution and supply quality in the network, in real time, by integrating with the head end system. In addition, the model may be used for asset management and distribution network expansion. However the limited amount of data that can be delivered from battery operated meters through an AMI system and the fact that the data often not are coincident limits the accuracy of the results and put constraints to the use of the results.

Thus, an effective method for measuring, collecting and analysing utility meter data with the purpose to provide accurate results describing the performance of the distribution network is desired.

OBJECT OF THE INVENTION

In particular, it may be seen as an object of the present invention to provide an effective method for using data collected from utility meters for modelling and analysing a utility distribution network.

SUMMARY OF THE INVENTION

Thus, the above described object and several other objects are intended to be obtained in a first aspect of the invention by providing a method for determining a flow rate and a temperature of a fluid at a selected position in a district heating or cooling utility distribution network, the utility distribution network comprising a plurality of interconnected distribution lines and smart utility meters arranged to register the energy delivered at consumer premises situated along the distribution lines, the utility meters are connected to a Head End System using an Advanced Metering Infrastructure the method comprising the steps of: collecting meter data time series from the smart utility meters using an Advanced Metering Infrastructure, calculating the temperature and the flow rate at the selected position based on; flow and temperature information derived from the collected meter data time series, topology of the utility distribution network, including lengths of the distribution lines, and heat transfer coefficients of the distribution lines; characterized in that the meter data times series collected from the utility meters comprises at least: an accumulated volume , and an integrated flow-temperature product calculated by the meter; and in that the derived flow and temperature information include: an average flow derived from the collected meter data time series as $Q_n = \frac{V_n - V_{n-1}}{\Delta t}$, and a volume weighted temperature derived from the collected meter data time series as $T_n = \frac{\varepsilon_n - \varepsilon_{n-1}}{V_n - V_{n-1}}$. The method is advantageous for determining flow rate and temperature of the fluid inside a distribution line such as a flow pipe. The method may be used for calculating the temperature at one or a multitude of selected positions along the distribution lines of the distribution network. The individual positions may be selected to concern the forward flow or the return flow. The selection of positions may be performed by an operator selecting single or groups of positions or by a computer implemented method selecting multiple positions for which the temperature and / or flow rate are to be visualized e.g. on a map including data from a Geographical Information System (GIS). The temperature and flow rate of the fluid at a selected position calculated by the method are estimates. The certainty of the estimates will depend on the quality of the meter data time series available for the calculations. The quality of the meter data is determined by factors such as sampling rate, resolution, concurrency of samples etc. Flow and temperature information derived from the meter data time series shall be construed to include any metric directly included in or derived from the meter data. These metrics may include absolute values, relative values, accumulated values and statistical metrics such as first, second and third moment of relevant parameters measured by the utility meter or any sensor associated to the utility meter or Advanced Metering Infrastructure (AMI). The smart utility meter may be a legal meter, i.e. a meter which is subdued to regulatory demands. Such regulatory demands may be demands to the precision of the measurements. The smart utility meter may be a heat meter, cooling meter or another type energy meter for measuring thermal energy.

The topology of the utility distribution network describes the network including nodes of connecting distribution lines and consumer service lines. Other elements of the distribution network, such as shunts between forward flow and return flow may also be included in the topology. Accurate and detailed description of the topology results in accurate estimates of flow rate and temperature.

The integrated flow-temperature product used by the method is calculated as $\varepsilon_n = \int_0^n Q(t) \cdot T(t) dt$ by the utility meter. Such a continuous time domain calculation may however not be easy implementable in a utility meter. A utility meter comprising a flow meter, such as an ultrasonic flow meter based on the transit time principle, does not provide a continuous signal representing the flow, rather a sequence of time discrete samples of the flow is provide. Such a utility meter may calculate the integrated flow temperature product from sampled time discrete samples as $\varepsilon_n = \sum_{i=0}^n Q_i \cdot T_i \cdot \Delta t$.

Using statistical metrics such as a volume weighted temperature and the average flow for the calculations of flow rate and temperature in the utility distribution network has the advantage that the meter data time series may be sampled with a long sampling interval. The method is adequate in systems where the collected meter data time series has a sampling interval being larger than 10 minutes. Even systems providing meter data sampled with intervals of up to 30 minutes or even up to 60 minutes provide accurate results. Provided that the energy consumption by the consumers are sufficiently high even meter data time series sampled with an interval of 12 - 48 hours will result in flow rate and temperature estimates with an accuracy suitable for modelling the utility distribution network and detection of malfunctions. Especially meter data time series sampled with an interval of 24 hours have, when used by the disclosed method, proven as sufficient for providing accurate and useful results and models of the utility distribution network.

The method may be extended with a step wherein the flow rate and temperature is calculated for a number of reference points to obtain a first set of flow-temperature estimates, the first set of flow-temperature estimates are subsequently used as flow-temperature data sets for calculating a second set of flow-temperature estimates estimating temperature and flow rate at the position of the utility meters. The reference points may be any point in the distribution network serving as a feed point of a sufficient number of consumers with individual smart utility meters. A reference point may serve as a feed point for as few as 10 consumers, however more precise estimates for the reference point will be achieved if at least 10-50 preferably up to 100 consumers are fed from the selected reference point. Reference points may even be selected at points in the utility distribution network feeding hundreds of consumers such as 100 - 1000 consumers to achieve an improved accuracy on the estimates. In yet another additional step of the method, the second set of flow-temperature estimates is compared to the flow-temperature data sets derived from the collected meter data time series, to detect potential anomalies in the utility distribution network. Comparing the measured flow and temperature data to the estimated values obtained by this method has the effect of identifying sections of the utility distribution network for which the heat loss deviates from the expected.

Different mathematical methods may be used for realization the method. In one approach, the temperature of the fluid in the distribution line is determined by use of methods based on graph theory and the utility distribution network is described in the terms of a graph object. Graph theory is the study of graphs, which are mathematical structures used to model pairwise relations between objects, graph theory is especially used within the area of discrete mathematics and is well described in literature. Other adequate mathematical methods for calculating flow and temperature in the utility distribution network may however be used. To obtain reliable results in more complex network topologies it may be necessary to implement a version of the method in which the temperature and / or the flow rate is calculated using one or more optimization algorithms. Recursive calculations and mathematical optimization principles may improve the accuracy of the resulting estimates.

In order to provide information about flow speeds in the utility distribution network it may be beneficial to include a step in which the diameter of the distribution lines is included in the calculations and the flow speed of the fluid in the distribution lines further is calculated. Knowing the flow speed in the distribution network enables functionalities wherein the transit time of the fluid from the utility plant to the selected position in the distribution network further is calculated. The flow speed may further be presented on a map show geographical information including the utility distribution network.

A second aspect of the invention includes a system comprising multiple smart utility meters, an advanced metering infrastructure and a head end system, wherein the head end system is arranged to use the method described above to create a model of the utility distribution network by determining the flow rate and temperature of the fluid in the utility distribution network. Using the disclosed method as a part of a smart utility system has the effect that the utility manager may analyze and monitor the utility distribution network, based on data collected from the utility meters. The data may be real time data or close to real time data or historical data in all cases malicious conditions may be detected. The method may as such be used as an integrated part of the utility management system or a maintenance interface of the advanced metering system or be deployed in a separate analytics interface or as an integrated part of other SW tools. To gain the full benefit from the data obtained by the method, solutions wherein the head end system is arranged to project the model onto GIS-data showing the utility distribution network may be provided. Such a solution may further be arranged to support placement of virtual probes at a position of the utility distribution network to display estimated parameters for the specific location.

The individual aspects of the present invention may each be combined with any of the other aspects. These and other aspects of the invention will be apparent from the following description with reference to the described embodiments.

BRIEF DESCRIPTION OF THE FIGURES

The methods according to the invention will now be described in more detail with regard to the accompanying figures. The figures show one way of illustrating the functionality and methods of the present invention and is not to be construed as being limiting to other possible embodiments falling within the scope of the attached claim set.

Fig. 1 describes a district heating utility distribution system, with an Advanced Metering Infrastructure,

Fig. 2 illustrates a model for a method of estimating flow rate and temperatures in a utility distribution network based on flow rate and temperature date sets,

Fig. 3 illustrates a model of a method for estimating flow rate and temperatures in a utility distribution network based on a the integrated flow temperature product and the accumulated volume,

Fig. 4 depicts the topology of a district heating utility distribution network,

Fig. 5 illustrates a model for calculating the heat loss in a distribution line, and

Fig. 6 illustrates the use of optimization to determine temperature and flow rate of the fluid in the utility distribution network.

## DETAILED DESCRIPTION OF AN EMBODIMENT

The disclosed method for determining flow and temperature estimates at any position in a utility distribution network of a district heating utility comprises the main steps of generating meter data, collecting meter data, describing the utility distribution network, calculate flow and temperature estimates at any position in the network. The method may further be extended by adding a step of comparing the resulting estimates to the collected data for detection of irregularities.

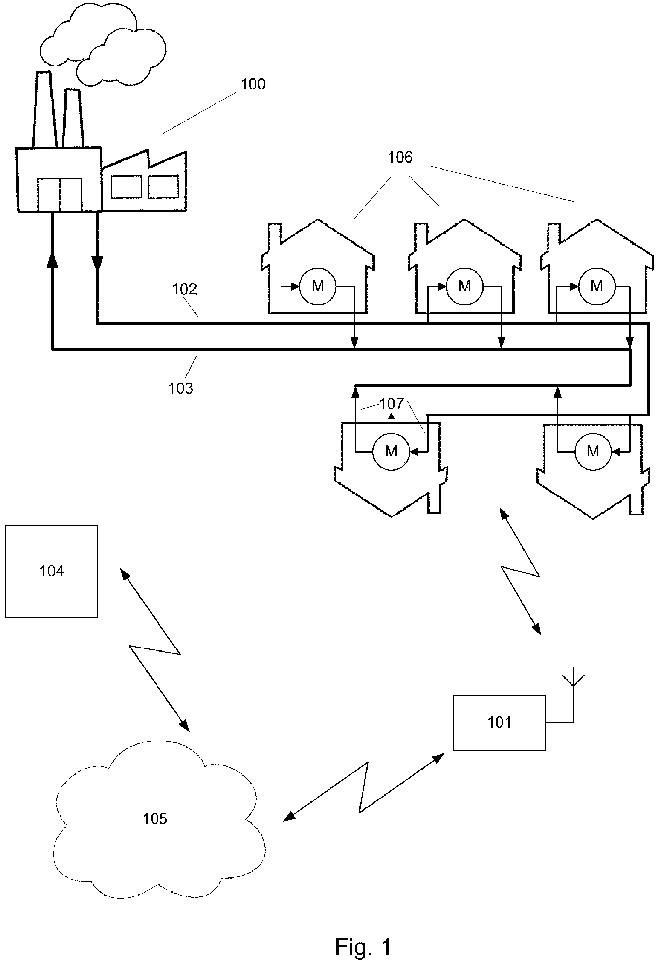

Now referring to fig. 1 a district heating utility distribution network including an Advanced Meter Reading (AMI) System is shown. Each consumer premises 106 is connected to the utility plant 100 via the district heating utility distribution network including distribution lines 102, 103 and consumer service lines 107. The connection includes a forward flow 102 and a return flow 103. The fluid in the pipes is heated at the district heating utility plant 100 and the energy is consumed by cooling down the fluid delivered by the forward 102 flow and returning the cooled down fluid in the return flow 103. The distribution network including distribution- and consumer service lines 102, 103, 107 are thermic isolated from the surroundings to minimize heat loss. At each consumer premises 106, a utility meter M such as an ultrasonic energy meter or another type of energy meter, measures the energy consumed. The utility meter M measures at least the forward and return temperatures of the fluid and the volume / flow rate of the fluid. Knowing the before mentioned temperatures and volume, the energy consumption can be calculated. The utility meters M are connected to a Head End System (HES) 104 using the AMI. The utility meters M may deliver any data obtained by the meter or external sensors to the HES 104, however the capacity of the AMI and the battery capacity of the utility meters M will limit the amount of data that can be delivered to the HES 104. The AMI may use any suitable technology for carrying data from the utility meter M to the HES 104 over one or more local area networks or wide area networks including connections to the open internet 105. A number of intermediate network devices such as data collectors 101, repeaters, routers gateways etc. may be a part of the communication paths between the utility meter M and HES 104. The AMI may use any suitable wireless technology (e.g. wireless M-Bus, Narrow band IoT, SigFox, any cellular technologies or proprietary communication protocols) or any wired communication technologies (e.g. wired M-Bus, LON, Ethernet).

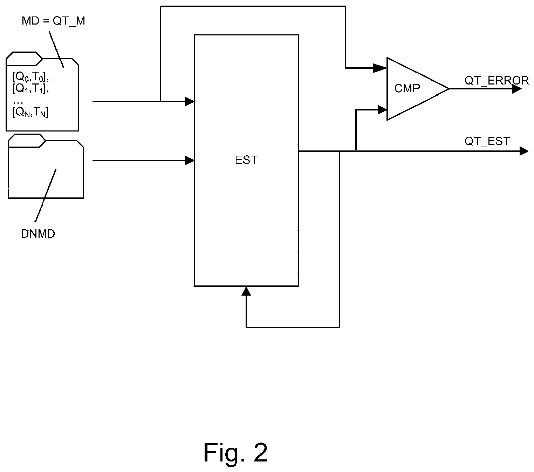

Now referring to fig. 2 a model of a method for calculating flow rate and temperature in a district heating distribution network is illustrated. The method requires two set of input data; meter data time series MD and distribution network model data DNMD. Meter data time series MD includes flow and temperature data set consisting of flow data and temperature data, also referred to as flow-temperature data sets QT_M in the following. The flow-temperature data sets QT_M are measured by the utility meters M at specific locations, including consumer premises 106 and collected by means of an Advanced Metering Infrastructure AMI. Distribution network model data DNMD comprises the topology of the distribution network, pipe dimensions, pipe lengths, coefficient of heat loss in the pipes. Distribution network model data DNMD cover all distribution lines from main utility distribution lines 102, 103 down to the consumer service line 107 for each consumer. The method includes an estimation block EST, which perform standard fluid- and thermodynamic calculations on the input data. Output from the estimation block EST is flow-temperature estimates QT_EST for specific locations in the utility distribution network. The flow-temperature estimates QT_EST are outputted from the method and may be used for further analytics or for direct visualization e.g. in a Geographical Information System (GIS). In a step of further analytics, the flow-temperature estimates QT_EST are compared to the meter data MD as collected from the utility meters M to identify discrepancies QT_ERROR, that indicates malicious conditions in the distribution network.

Using flow-temperature data sets QT_M measured by the utility meters M as input to the estimation block EST requires a high degree of concurrency of the meter data MD samples to obtain accurate estimates. Further, as the demand for energy at the consumer is varying the flow will vary accordingly and variations in the flow will cause variations in the forward and return temperatures. Thus frequent samples of flow-temperature data sets QT_M is required to get a useful output from the estimation block EST. In other words, concurrent and frequently sampled meter data time series MD from the population of meters is needed to achieve accurate flow-temperature estimates QT_EST from the estimation block EST of this method. This is in adverse to the capabilities of battery operated meters which have limited capacity for delivering data through the bandwidth limited AMI. One way of overcoming these obstacles could presumably be by applying a simple averaging algorithm averaging flow and temperature over a longer sampling period. Such solution is however insufficient as will be elucidated by the following example. An exemplary installation may experience short bursts of very high flow followed by a long period of no flow. Averaging such flow over a longer sampling period will result in a large average flow, however, as the temperature of the fluid cools down in the pipes during the period of no flow, the average temperature will be low. Looking at the average would thus not provide an accurate picture of the actual operation. Meter data time series MD consisting of averaged flow-temperature data sets QT_M would thus not describe the dynamics of the system sufficiently for doing the needed analytics.

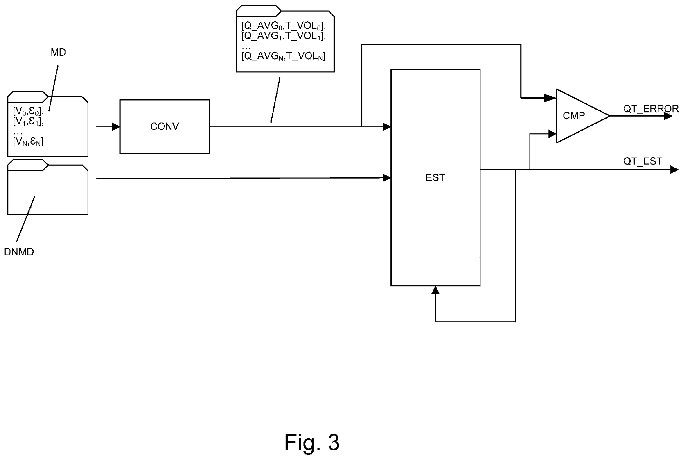

Referring to fig. 3 the method of fig. 2 is extended with an additional converter block CONV and the meter data time series MD inputted to the method has a different data content. The meter data time series MD used by the modified method of fig. 3 includes two metrics calculated by the meter. A first metric is the Integrated Flow Temperature Product (IFTP), denoted ε, and a second metric is the accumulated volume, denoted V. Together these metrics constitute a data set denoted εV_M, from which flow and temperature information can be derived as elucidated in the following. Using εV_M for the fluid- and thermodynamic calculations has the effect of alleviating the need for strictly concurrent and frequently sampled meter data.

The IFTP to the time n is calculated by the utility meter M as:

$$\varepsilon_n = \int_0^n Q(t) \cdot T(t) dt$$

Where:

     $\varepsilon_n$ = Integrated Flow Temperature Product (IFTP) at time n.
     $Q(t)$ = The time varying flow in the utility meter.
     $T(t)$ = The time varying temperature of the fluid.

The IFTP, ε, and the accumulated volume V, cannot be used directly by the estimation block EST for doing fluid- and thermodynamic calculations. However, based on meter data time series MD, including the IFTP and the accumulated volume V, flow and temperature information in form of a mean flow Q_AVG and a flow-weighted temperature T_VOL can be calculated as below:

$$Q\_AVG_n = \frac{V_n - V_{n-1}}{\Delta t}$$

and

$$T\_VOL_n = \frac{\varepsilon_n - \varepsilon_{n-1}}{V_n - V_{n-1}}$$

Where:

     $Q\_AVG_n$ = The average flow to the time n.
     $T\_VOL_n$ = Flow-weighted temperature to the time n.
     $\Delta t$ = The time between two samples of meter data time series MD.
     $V_n$ = The accumulated volume at time v.
     $\varepsilon_n$ = The integrated flow temperature product ITFP at time n.

The mean flow Q_AVG and the flow-weighted temperature T_VOL are suitable as input to the estimation block EST. The computation Q_AVG and T_VOL is performed by the converter block CONV. Using Q_AVG and T_VOL as the input to the estimation block EST, the accuracy of the resulting flow-temperature estimates QT_EST significantly improves compared to using time discrete samples of flow and temperature. This effect is especially prominent when using meter data time series MD sampled using a long sampling interval. Further, the accuracy of the resulting flow-temperature estimates QT_EST are less sensitive to lack of concurrency between meter data series MD sampled across the population of utility meters M when based on the IFTP ε and the accumulated volume V.

Using the integrated flow temperature product and accumulated volume for meter data time series MD has the effect that the sampling interval may be increased significantly while still obtaining accurate flow-temperature estimates QT_EST. Sampling intervals in the range from 5 to 60 minutes is sufficient to obtain flow-temperature estimates QT_EST with a high accuracy. Even by using sampling intervals in the range from 1 to 24 hours the resulting flow-temperature estimates QT_EST has the accuracy required to be used for modelling and analysing the utility distribution network. Increasing the sampling interval has the advantage that the amount of transmitted data is reduced, which reduce energy and bandwidth consumption for transferring data through the AMI.

The requirements to concurrency of meter data time series MD is also alleviated by using the integrated flow temperature product and accumulated volume. This has the effect that coincident sampling of meter data is not required. Experiments has revealed that using meter data time series MD sampled with a jitter of +/- 2% of the sampling period, the method still yields accurate and useful results. Thus, the requirements to the time accuracy of the device timestamping or sampling the meter data time series MD is released significantly.

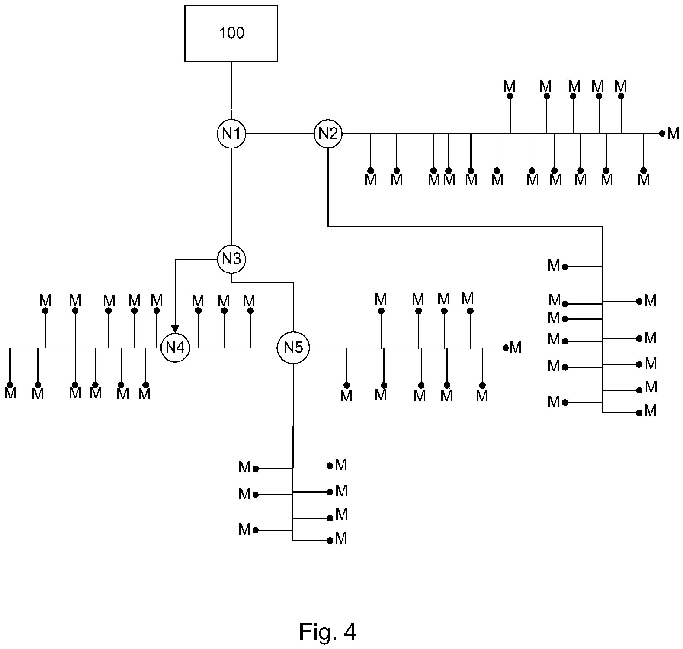

Now applying the method of fig. 3 to a district heating utility distribution network as illustrated in fig. 1 and fig. 4. The utility meters M are installed at the consumer premises 106 connected to the distribution lines throughout the edges of the network. The utility meters M usually measure the consumed energy for billing purposes as well as other parameters such as the accumulated volume of fluid flowing in and out of the consuming entity. To support the method of fig. 3 the utility meters M are configured to perform sufficient measurements and compute the accumulated volume V and the IFTP ε. Calculation of the IFTP ε is performed by the utility meter M based on discrete samples of flow and temperature as:

$$\varepsilon_n = \sum_{i=0}^{n} Q_i \cdot T_i \cdot \Delta t$$

Where:

Q$_i$ = The flow sampled at time i.
T$_i$ = The temperature sampled at time i.
Δt = The time between two samples.

The sampling interval for flow and temperature may vary depending on the type of utility meter M; a typical sampling interval will be in the range from 1 to 64 seconds. Sampling of flow rate and temperature does not need to be sampled coincidently; the sampling of the two parameters may e.g. be shifted by half a sampling period. The utility meter M will sample and store time series of meter data MD including the IFTP ε and the accumulated volume V along with time stamps indicating the sampling time in the memory of the utility meter M. The sampling interval of the time series of data is typically in the range from 1 minute to one hour or even up to 24 hours. The storage interval may be fixed or variable and will depend on the utility meter M storage capacity. The time series of meter data MD will be collected by an AMI infrastructure. To save energy in the utility meters M and to preserve the limited data band width of the AMI, a compromise only to collect a subset of the time series samples may be made. The remaining time series samples may be collected by the AMI later if required. As an alternative, the utility meter M may autonomously transmit the current meter data to the AMI and a receiving device may establish a timestamped time series of meter data MD.

The time series of data from all the relevant meters is processed by the converter block CONV as previously described and used by the by the estimation block EST to calculate the flow rate and temperature at nodes N1, N2, N3, N4, N5 of the distribution network, as shown in fig. 4. The nodes shown in Fig. 4 are points where distribution lines of the utility distribution network are connected, however, flow rate and temperature may also be calculated at other positions of the network.

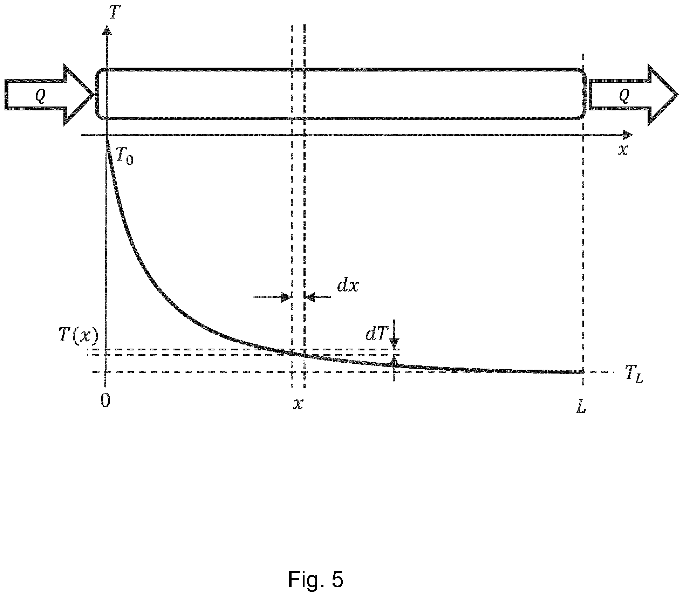

Calculation of flow rate and temperature of the fluid in the distribution lines and nodes of fig. 4, is performed using standard fluid dynamic and thermodynamic calculations. The flow rates of the fluid in the nodes N1, N2, N3, N4, N5 of fig. 4 can be calculated by summing up flows of all branches. Heat loses in the distribution lines is calculated using the heat equation, which is commonly known within the field of thermodynamics. Fig. 5 shows a method for calculating heat loss of a fluid travelling along a distribution line:

$$dT = -\frac{k}{Q \cdot C} \cdot \Delta T \cdot dx$$

Where:

T = the temperature of the fluid along the distribution line.
x = the position in the distribution line.
Q = the flow rate.
C = specific heat capacity of the fluid.
K = the heat transfer coefficient of the pipe.
Δt = difference between the distribution line temperature and ambient temperature.

Solving this differential equation within the limits $T = T_0 \rightarrow T = T_L$ and $x = 0 \rightarrow x = L$

Yields:

$$T_L = (T_0 - T_a)e^{-\frac{kL}{QC}} + T_a$$

Where:

$T_L$ = the temperature of the fluid at the outlet.
$T_0$ = the temperature of the fluid at the inlet.
$T_a$ = the ambient temperature.
L = length of the distribution line.
Q = the flow rate.
C = specific heat capacity of the fluid.
K = the heat transfer coefficient of the pipe

The flow rate and temperature of the fluid in a utility distribution line can thus be calculated for any position in the utility distribution network. These results may be used for modelling the utility distribution network, by creating a model describing how flow rate and temperature changes throughout the utility distribution network.

The heat transfer coefficient K describes the heat loss due to transfer of heat energy from the fluid in the transmission lines to the surroundings. The unit of the heat loss coefficient is $\frac{Watt}{meter \cdot Kelvin}$ and does thus describe the energy transfer rate between the fluid in the distribution line and surroundings depending on the length of the distribution line and the temperature difference. The heat loss coefficient is specific for the used distribution line.

By use of the diameter of the distribution lines, it is further possible to calculate the speed of the fluid in the distribution lines using standard fluid-dynamic calculations. From the speed of the fluid in the distribution lines, the transit time of fluid flowing from the utility plant 100 to a position in the distribution network may be calculated as well.

The time series of meter data MD is collected from a large number of utility meters, M, substantially covering all the edges of the utility distribution network as illustrated in fig. 4. The calculation of flow-temperature estimates QT_EST for each node N1, N2, N3, N4, N5 is thus based on data from a large number of meters and distribution network model data DNMD for a large number of distribution lines. This has the effect that the contribution from the data measured by every single utility meter M has less influence on the flow rate and temperature calculated for each node N1, N2, N3, N4, N5. Thus if one of the parameters in the distribution network model data DNMD is no longer valid e.g. due to a damage to the insolation of a consumer service line this will have a very limited influence on the flow-temperature estimates at a node N1, N2, N3, N4, N5.

After calculating the flow-temperature estimates for all nodes N1, N2, N3, N4, N5 in the utility distribution network these flow-temperature estimates may be reinjected to the calculations as illustrated in fig. 3. By reinjecting flow-temperature estimates QT_EST for all nodes N1, N2, N3, N4, N5 a second set of flow-temperature estimates for the positions of the utility meters M can be calculated. This second set of flow-temperature estimates is then compared to the meter data time series MD collected from the utility meters M, this is illustrated by the comparator block COMP in figure 3. By comparing the two data sets, an error estimate QT_ERROR is generated. This error estimate QT_ERROR is indicative of potentially malicious problems in the utility distribution lines, the consumer service line or the installation at the consumer premises. Since the second set of flow rates and temperatures are calculated for multiple individual positions with individual consumer service lines 107, comparing meter data time series for these positions to these estimates will provide a very sensitive test for detecting errors in the utility distribution line or consumer service line. The error estimate QT_ERROR may be further analysed and depending on the result of the further analysis, work orders for service engineers may be provided based on the findings.

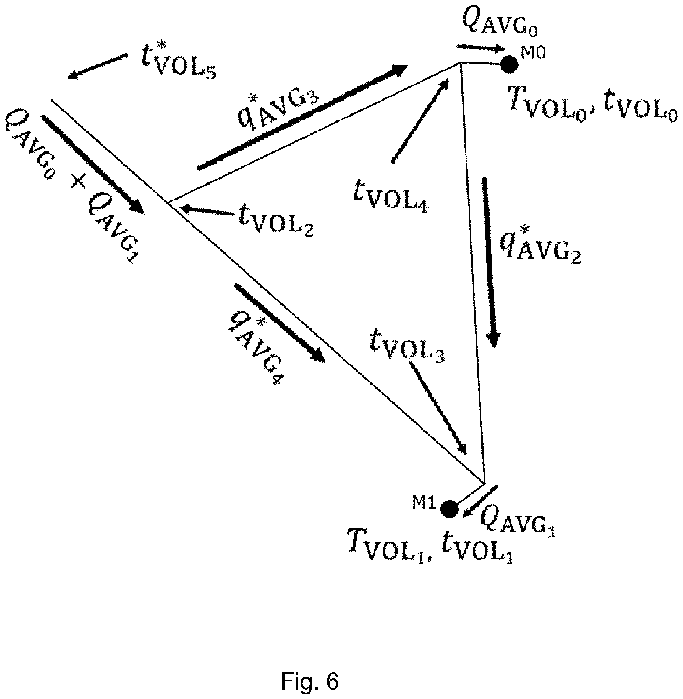

Now referring to Fig. 6 a more complex utility distribution network is illustrated. For the purpose of calculating flow rates and temperature in a utility distribution network with such a more complex topology methods of optimization is used. Especially the Levenberg-Marquardt and Nelder-Mead methods have proven to be efficient in solving this optimization problem. In the simplified example of Fig. 6 the average flows, $Q_{AVG_0}$, $Q_{AVG_1}$ and volume weighted temperatures $T_{VOL_0}$, $T_{VOL_1}$ are derived from meter data time series MD comprising the accumulated volume V and the IFTP ε measured by the utility meters M1, M2 at the consumer premises. Furthermore, the flows $q^*_{AVG_2}$, $q^*_{AVG_3}$, $q^*_{AVG_4}$ and supply node temperature $t^*_{VOL_5}$ are subject to optimization in order for the model temperatures $T_{VOL_0}$ and $t_{VOL_1}$ to fit the measured parameters $T_{VOL_0}$ and $T_{VOL_1}$. When the optimal values are found, the temperatures throughout the network can be extracted and used for visualization and further analysis. In this way e.g. the forward temperature at the inlet of the distribution network $t^*_{VOL_5}$ is extracted from the meter data time series MD. By correlating the model parameters $t_{VOL_0}$ and $t_{VOL_1}$ to the measured values $T_{VOL_0}$ and $T_{VOL_1}$, knowledge can be obtained regarding the network performance. Using this method a completely data driven model of the utility distribution network is created based solely on data from utility meters M. Data from the utility Supervisory control and data acquisition (SCADA) system is not required, however, it may be included in order to improve the model.

For calculations and optimizations of the model of the distribution network, it is advantageous to apply graph theory. Using graph theory, the utility distribution network is described in the terms of a graph object *G*, comprising vertices (network nodes) and edges (pipes connecting the network nodes). The meter data MD and the distribution network model data DNMD are incorporated in the graph object as vertex and edge attributes. Graph theory is then applied for network analysis and for routing flows in the network from the utility (supply node, *sn*) to the consumers (end nodes, *en*). Several computer implemented methods or algorithms, in the following referred to as methods may be implemented using standard techniques based on graph theory. The methods described in the following are named according to the following nomenclature *method_name(par1, par2, ... parN)*, wherein the *method_name* is the name of the method related to its purpose and *par_1, par_2 ... par_N* denotes the input parameter used by the method. The method, calc_flow(G, sn,en), returns a graph object with an added edge attribute that contains the estimate for the flow in all pipe sections in the distribution network. This function aggregates the measured flows from all consumers (end nodes) in the network, and may also allow for an additional flow to simulate circulations. Furthermore, the method, calc_T1(*G, sn, en*), returns a graph object with an added vertex attribute that contains an estimate for the forward temperature at all nodes in the network. The temperature drop between two vertices connected by an edge (along a pipe section) is determined by the method, temp_drop(*L, Q, T_0, T_a, k, c)*, which returns the temperature of the vertex at the incoming edge, and takes 6 arguments: distance between the two vertices *L*, flow *Q*, temperature of the vertex and the outgoing edge $T_0$, ambient temperature $T_\alpha$ the heat transfer

coefficient of the pipe section $k$ and the heat capacity for the fluid c. The methods described above are wrapped in an optimization method, optim_network($G$, $sp$, $en$), which allow a number of parameters (e.g. circulation flow, temperature at utility supply node, heat transfer coefficients etc.) to vary in order to fit the model $G$ to the measured data. The method returns the optimized parameters for the specific system, and these parameters can then be used to extract the temperatures at all positions in the network.

The resulting set of flow-temperature estimates covering all nodes or all positions of the utility distribution network may be used for monitoring the distribution grid, and visualize these estimates by projecting them onto a map showing also the distribution pipe network and other technical structures such as roads, houses etc. The visualization techniques used are animations and various color palettes to illustrate flow magnitude and direction, as well as forward and return temperature at all locations in the network.

flow-temperature estimates QT_EST and data collected from the meters facilitates a data driven model of the distribution network. This model may be used for estimation of various parameters which are relevant in order to monitor and optimize the distribution and supply quality in the network, in real time, by integrating with the HES. Also the model can be used for asset management and distribution network expansion.

Such a data driven model provide the utility companies with a real time overview of their distribution network in terms of current state and performance. Historical performance and network state may be used for future analyses, however the real time view is possible since meter data is normally available within an hour from the measurement time. This enables the utility company to respond immediately on e.g. bursts, and to monitor the quality of the delivered heat.

The current state of the distribution network is important in order to monitor forward and return temperature and flow in all branches of the network. The state of the network is estimated using data from the network edges, where utility meters M are installed at the consumer premises. By estimating temperatures and flow in the network, and analyzing these results, it is possible to identify heat losses, wrongly regulated circulations, bursts, leaks, faulty utility meter installations, poorly insulated heat systems etc. These parameters can also be traced in small incremental time steps to identify time varying trends.

The historical state and network performance, for some period (months or seasons) can be used in asset management for determining which pipes are in good shape and have a low heat loss etc. and for planning the network development.

To provide user-friendly interfaces and visualization of the estimated network parameters the estimated model parameters may be projected onto GIS-data showing the utility distribution network and virtual probes may be placed by the operator to display estimated parameters for some specific location in the network.

It is to be understood that all the disclosed methods may be applied on the forward flow 102 running from the utility plant 100 towards the consumer as well on the return flow 103 of cooled down fluid running in the opposite direction from the consumer towards the utility plant 100.

The utility distribution networks illustrated in Fig. 1, Fig. 4, Fig. 6 are for illustrative purposes and to keep the description simple kept as small sections of a distribution network. It is to be understood that the disclosed methods can be extended to cover large utility distribution networks to which thousands of consumers, multiple utility plants 100 and decentral production sites are connected. However it may for the purpose of simplicity be beneficial to break down the utility distribution network in subsections.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is defined by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for determining a flow rate and a temperature of a fluid at a selected position in a district heating or cooling utility distribution network, the utility distribution network comprising a plurality of interconnected distribution lines and smart utility meters (M) arranged to register the energy delivered at consumer premisses situated along the distribution lines, the utility meters (M) are connected to a Head End System (HES) 104 using an Advanced Metering Infrastructure the method comprising the steps of:

- collecting meter data time series (MD) from the smart utility meters (M) using the Advanced Metering Infrastructure,
- calculating the temperature and the flow rate (QT_EST) at the selected position based on;

- flow and temperature information derived from the collected meter data time series (MD),
- topology of the utility distribution network, including lengths of the distribution lines, and
- heat transfer coefficients of the distribution lines;

**characterized in that** the meter data times series (MD) collected from the utility meters comprises at least:

- an accumulated volume (V), and
- an integrated flow-temperature product ($\varepsilon$) calculated by the meter,

and **in that** the derived flow and temperature information include:

- an average flow (Q_AVG) derived from the collected meter data time series (MD) as

$$Q_n = \frac{V_{\mathrm{n}} - V_{\mathrm{n}-1}}{\Delta t}$$ , and

- a volume weighted temperature (T_VOL) derived from the collected meter data time series (MD) as

$$T_n = \frac{\varepsilon_{\mathrm{n}} - \varepsilon_{\mathrm{n}-1}}{V_{\mathrm{n}} - V_{\mathrm{n}-1}} \ .$$

2. A method according to claim 1, wherein the integrated flow-temperature product ($\varepsilon$) is calculated as

$$\varepsilon_n = \int_0^n Q(t) \cdot T(t)\,dt \ .$$

3. A method according to claim 1, wherein the integrated flow temperature product ($\varepsilon$) is calculated from sampled time discrete samples as

$$\varepsilon_n = \sum_{i=0}^n Q_i \cdot T_i \cdot \Delta t \ .$$

4. A method according to any of the preceding claims, wherein the collected meter data time series (MD) has a sampling interval being larger than 10 minutes.

5. A method according any of the preceding claims, wherein the flow rate and temperature is calculated for a number of reference points (N1, N2, N3, N4, N5) to obtain a first set of flow-temperature estimates (QT_EST), the first set of flow-temperature estimates are subsequently used as flow-temperature data sets ($QT_1$, $QT_2$ ... $QT_N$) for calculating a second set of flow-temperature estimates (QT_EST) estimating temperature and flow rate at the position of the utility meters (M).

6. A method according to claim 5, wherein the second set of flow-temperature estimates (QT_EST) is compared to the flow-temperature data sets ($QT_1$, $QT_2$ ... $QT_N$) derived from the collected meter data time series (MD), to detect potential anomalies in the utility distribution network.

7. A method according to any of the preceding claims, wherein the temperature of the fluid in the distribution line is determined by use of methods based on graph theory and the utility distribution network is described in the terms of a graph object.

8. A method according to any of the preceding claims, wherein the temperature and / or the flow rate is calculated using an optimization algorithm.

9. A method according to claims 1-4, wherein the diameter of the distribution lines is included in the calculations and the flow speed of the fluid in the distribution lines further is calculated.

10. A method according to claim 9, wherein the transit time of the fluid from the utility plant (100) to the selected position in the distribution network further is calculated.

11. A system comprising multiple smart utility meters (M), an advanced metering infrastructure and a head end system (104), wherein the head end system (104) is arranged to use the method of claim 1 to create a model of the utility distribution network by determining the flow rate and temperature of the fluid in the utility distribution network.

12. A system according to claim 11, wherein the head end system (104) is arranged to project the model onto GIS-data showing the utility distribution network.

13. A system according to claim 11, arranged to support placement of virtual probes at a position of the utility distribution network to display estimated parameters for the specific location.

**Patentansprüche**

1. Verfahren zum Bestimmen einer Durchflussrate und einer Temperatur eines Fluids an einer ausgewählten Position in einem Fernwärme- oder Kühl-Energieversorgungsnetz, das Energieversorgungsnetz umfassend eine Vielzahl von miteinander verbundenen Versorgungsleitungen und intelligenten Versorgungsgutmessvorrichtungen (M), die dazu angeordnet sind, die an Verbrauchergrundstücke, die entlang der Versorgungsleitungen angeordnet sind, gelieferte Energie zu registrieren, wobei die Versorgungsgutmessvorrichtungen (M) mit einem Head-End-System (HES) 104 unter Verwendung einer Advanced Metering Infrastructure (fortschrittlichen Mess-Infrastruktur) verbunden sind, wobei das Verfahren die folgenden Schritte umfasst:

- Sammeln von Messvorrichtungsdaten-Zeitreihen (MD) von den intelligenten Versorgungsgutmessvorrichtungen (M) unter Verwendung der Advanced Metering Infrastructure,
- Berechnen der Temperatur und der Durchflussrate: (QT_EST) an der ausgewählten Position auf folgender Grundlage:

- Durchfluss- und Temperaturinformationen, die aus den gesammelten Messvorrichtungsdaten-Zeitreihen (MD) abgeleitet werden,
- Topologie des Energieversorgungsnetzes, einschließlich Längen der Versorgungsleitungen, und
- Wärmeübergangskoeffizienten der Versorgungsleitungen;

**dadurch gekennzeichnet, dass** die Messvorrichtungsdaten-Zeitreihen (MD), die von den Versorgungsgutmessvorrichtungen gesammelt werden, zumindest Folgendes umfassen:

- ein akkumuliertes Volumen (V) und
- ein integriertes Durchfluss-Temperatur-Produkt ($\varepsilon$), berechnet durch die Messvorrichtung,

und dadurch, dass die abgeleiteten Durchfluss- und Temperaturinformationen Folgendes beinhalten:

- einen mittleren Durchfluss (Q_AVG), abgeleitet aus den gesammelten Messvorrichtungsdaten-Zeitreihen (MD) als $Q_n = \frac{V_n - V_{n-1}}{\Delta t}$, und
- eine volumengewichtete Temperatur (T_VOL), abgeleitet aus den gesammelten Messvorrichtungsdaten-Zeitreihen (MD) als $T_n = \frac{\varepsilon_n - \varepsilon_{n-1}}{V_n - V_{n-1}}$.

2. Verfahren nach Anspruch 1, wobei das integrierte Durchfluss-Temperatur-Produkt ($\varepsilon$) als $\varepsilon_n = \int_0^n Q(t) \cdot T(t) dt$ berechnet ist.

3. Verfahren nach Anspruch 1, wobei das integrierte Durchfluss-Temperatur-Produkt ($\varepsilon$) aus abgetasteten zeitdiskreten Abtastungen als $\varepsilon_n = \sum_{i=0}^{n} Q_i \cdot T_i \cdot \Delta t$ berechnet ist.

4. Verfahren nach einem der vorhergehenden Ansprüche, wobei die gesammelte Messvorrichtungsdaten-Zeitreihe (MD) ein Abtastintervall aufweist, das größer als 10 Minuten ist.

5. Verfahren nach einem der vorhergehenden Ansprüche, wobei die Durchflussrate und die Temperatur aus einer Reihe von Referenzpunkten (N1, N2, N3, N4, N5) berechnet sind, um einen ersten Satz von Durchfluss-Temperatur-Schätzwerten (QT_EST) zu erhalten, wobei der erste Satz von Durchfluss-Temperatur-Schätzwerten nachfolgend als Durchfluss-Temperatur-Datensätze ($QT_1, QT_2 ... QT_N$) zum Berechnen eines zweiten Satzes von Durchfluss-Temperatur-Schätzwerten (QT_EST), die die Temperatur und den Durchfluss an der Position der Versorgungsgutmessvorrichtungen (M) schätzen, verwendet wird.

6. Verfahren nach Anspruch 5, wobei der zweite Satz von Durchfluss-Temperatur-Schätzwerten (QT_EST) mit den Durchfluss-Temperatur-Datensätzen ($QT_1, QT_2 ... QT_N$), die aus der gesammelten Messvorrichtungsdaten-Zeitreihe (MD) abgeleitet sind, verglichen wird, um potentielle Anomalien in dem Energieversorgungsnetz zu erkennen.

7. Verfahren nach einem der vorhergehenden Ansprüche, wobei die Temperatur des Fluids in der Versorgungsleitung durch Verwendung von Verfahren auf Grundlage von Graphentheorie bestimmt ist und das Energieversorgungsnetz im Sinne eines Graphenobjekts beschrieben ist.

8. Verfahren nach einem der vorhergehenden Ansprüche, wobei die Temperatur und/oder die Durchflussrate unter Verwendung eines Optimierungsalgorithmus berechnet ist.

9. Verfahren nach Anspruch 1-4, wobei der Durchmesser der Versorgungsleitungen in der Berechnung enthalten ist und die Durchflussgeschwindigkeit des Fluids in den Versorgungsleitungen ferner berechnet wird.

**10.** Verfahren nach Anspruch 9, wobei die Durchgangszeit des Fluids von der Versorgungsanlage (100) zu der ausgewählten Position in dem Versorgungsnetz ferner berechnet wird.

**11.** System, umfassend mehrere intelligente Versorgungsgutmessvorrichtungen (M), eine erweitere Messinfrastruktur und ein Head-End-System (104), wobei das Head-End-System (104) dazu angeordnet ist, das Verfahren nach Anspruch 1 zu verwenden, um ein Modell des Energieversorgungsnetzes durch Bestimmen der Durchflussrate und der Temperatur des Fluids in dem Energieversorgungsnetz zu erzeugen.

**12.** System nach Anspruch 11, wobei das Head-End-System (104) dazu angeordnet ist, das Modell auf GIS-Daten, die das Energieversorgungsnetz zeigen, zu projizieren.

**13.** System nach Anspruch 11, dazu angeordnet, die Platzierung von virtuellen Sonden an einer Position des Energieversorgungsnetzes zu unterstützen, um geschätzte Parameter für den konkreten Standort anzuzeigen.

**Revendications**

**1.** Procédé permettant la détermination d'un débit et d'une température d'un fluide au niveau d'une position sélectionnée dans un réseau de distribution de services publics de chauffage ou de refroidissement de quartier, le réseau de distribution de services publics comprenant une pluralité de lignes de distribution interconnectées et de compteurs intelligents de services publics (M) agencés pour enregistrer l'énergie délivrée au niveau de locaux de consommation situés le long des lignes de distribution, les compteurs de services publics (M) étant connectés à un système de tête de réseau (HES) 104 à l'aide d'une infrastructure de comptage avancée, le procédé comprenant les étapes de :

- collecte d'une séries temporelle de données de compteur (MD) à partir des compteurs intelligents de services publics (M) à l'aide de l'infrastructure de comptage avancée,
- calcul de la température et du débit (QT_EST) au niveau de la position sélectionnée sur la base ;

- des informations d'écoulement et de température dérivées de la série temporelle de données de compteur collectée (MD),
- de la topologie du réseau de distribution de services publics, comprenant les longueurs des lignes de distribution, et

- des coefficients de transfert thermique des lignes de distribution ;

**caractérisé en ce que** la série temporelle de données de compteur (MD) collectée à partir des compteurs de services publics comprend au moins :

- un volume accumulé (V), et
- un produit intégré de la température par l'écoulement ($\varepsilon$) calculé par le compteur,

et **en ce que** les informations d'écoulement et de température dérivées comprennent :

- un écoulement moyen (Q_AVG) dérivé de la série temporelle de données de compteur collectée (MD) tel que $Q_n = \frac{V_n - V_{n-1}}{\Delta t}$ , et
- une température pondérée en volume (T_VOL) dérivée de la série temporelle de données de compteur (MD) collectée telle que $T_n = \frac{\varepsilon_n - \varepsilon_{n-1}}{V_n - V_{n-1}}$ .

**2.** Procédé selon la revendication 1, ledit produit intégré de la température par l'écoulement ($\varepsilon$) étant calculé tel que $\varepsilon_n = \int_0^n Q(t) \cdot T(t) dt$ .

**3.** Procédé selon la revendication 1, ledit produit intégré de la température par l'écoulement ($\varepsilon$) étant calculé à partir d'échantillons discrets dans le temps échantillonnés tel que $\varepsilon_n = \sum_{i=0}^n Q_i \cdot T_i \cdot \Delta t$ .

**4.** Procédé selon l'une quelconque des revendications précédentes, ladite série temporelle de données de compteur (MD) collectée possédant un intervalle d'échantillonnage supérieur à 10 minutes.

**5.** Procédé selon l'une quelconque des revendications précédentes, ledit débit et ladite température étant calculés pour un nombre de points de référence (N1, N2, N3, N4, N5) afin d'obtenir un premier ensemble d'estimations de température-écoulement (QT_EST), ledit premier ensemble d'estimations de température-écoulement étant ensuite utilisé en tant qu'ensembles de données de température-écoulement (QT$_1$, QT$_2$ ... QT$_N$) pour calculer un second ensemble d'estimations de température-écoulement (QT_EST) estimant la température et le débit au niveau de la position des compteurs de services publics (M).

6. Procédé selon la revendication 5, ledit second ensemble d'estimations de température-écoulement (QT_EST) étant comparé aux ensembles de données de température-écoulement $(QT_1, QT_2 ... QT_N)$ dérivés de la série temporelle de données de compteur (MD) collectées, pour détecter des anomalies potentielles dans le réseau de distribution de services publics.

7. Procédé selon l'une quelconque des revendications précédentes, ladite température du fluide dans la ligne de distribution étant déterminée à l'aide des procédés basés sur la théorie des graphes et ledit réseau de distribution de services publics étant décrit en termes d'objet graphique.

8. Procédé selon l'une quelconque des revendications précédentes, ladite température et/ou ledit débit étant calculé(s) à l'aide d'un algorithme d'optimisation.

9. Procédé selon les revendications 1 à 4, ledit diamètre des lignes de distribution étant compris dans les calculs et ladite vitesse d'écoulement du fluide dans les lignes de distribution étant en outre calculée.

10. Procédé selon la revendication 9, ledit temps de transit du fluide à partir de la centrale électrique (100) jusqu'à la position sélectionnée dans le réseau de distribution étant en outre calculé.

11. Système comprenant de multiples compteurs intelligents de services publics (M), une infrastructure de comptage avancée et un système de tête de réseau (104), ledit système de tête de réseau (104) étant agencé pour utiliser le procédé selon la revendication 1 afin de créer un modèle du réseau de distribution de services publics en déterminant le débit et la température du fluide dans le réseau de distribution de services publics.

12. Système selon la revendication 11, ledit système de tête de réseau (104) étant agencé pour projeter le modèle sur des données SIG présentant le réseau de distribution de services publics.

13. Système selon la revendication 11, agencé pour prendre en charge le placement de sondes virtuelles au niveau d'une position du réseau de distribution de services publics afin d'afficher des paramètres estimés pour l'emplacement spécifique.

Fig. 1

MD = QT_M

$[Q_0,T_0]$,
$[Q_1,T_1]$,
...
$[Q_N,T_N]$

DNMD

EST

CMP

QT_ERROR

QT_EST

Fig. 2

MD

[V₀,ℰ₀],
[V₁,ℰ₁],
...
[V_N,ℰ_N]

[Q_AVG₀,T_VOL₀],
[Q_AVG₁,T_VOL₁],
...
[Q_AVG_N,T_VOL_N]

CONV

DNMD

EST

CMP

QT_ERROR

QT_EST

Fig. 3

Fig. 4

Fig. 5

Fig. 6

**EP 3 531 368 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3199931 A1
- WO 2018026651 A1
- EP 3112823 A1